# EUROPEAN PATENT SPECIFICATION

(11) **EP 3 502 860 B1**
(45) Date of publication and mention of the grant of the patent: **25.05.2022**
(21) Application number: 18213699.4
(22) Date of filing: 18.12.2018
(51) Int. Cl.: G06F 3/06, G06F 3/12, G06F 21/78, H04N 1/21

(54) **INFORMATION PROCESSING APPARATUS, INFORMATION PROCESSING METHOD, AND STORAGE MEDIUM**
INFORMATIONSVERARBEITUNGSVORRICHTUNG, INFORMATIONSVERARBEITUNGSVERFAHREN UND SPEICHERMEDIUM
APPAREIL DE TRAITEMENT D'INFORMATIONS, PROCÉDÉ DE TRAITEMENT D'INFORMATIONS ET SUPPORT D'INFORMATIONS

(30) Priority: 19.12.2017 JP 2017242974
(43) Date of publication of application: 26.06.2019
(73) Proprietor: CANON KABUSHIKI KAISHA, Ohta-ku Tokyo 146-8501 (JP)
(72) Inventor: YASUKAWA, Akari, Ohta-ku, Tokyo 146-8501 (JP)
(74) Representative: Canon Europe Limited

(56) References cited:
- US-A1- 2002 181 134
- US-A1- 2011 238 901

## Description

### BACKGROUND OF THE INVENTION

### Field of the Invention

The present invention relates to an information processing apparatus, an information processing method, and a storage medium.

### Description of the Related Art

As an information processing apparatus capable of accumulating information with use of an external storage device such as a hard disk drive (hereinafter referred to as an HDD), an information processing apparatus configured to use received information (hereinafter referred to as data) after storing it into the external storage device and delete the data upon completing processing has been known. In such an information processing apparatus, the data and positional information about the data on the HDD (hereinafter referred to as a file allocation table (FAT)) are stored on the HDD. Generally, only the FAT is deleted when normal data is deleted, and the data itself remaining on the HDD is not deleted. In such a state, however, the remaining data may be referred to by detaching the HDD from the information processing apparatus and connecting the HDD to a computer (hereinafter referred to as a personal computer (PC)) or the like and analyzing the inside thereof. For this reason, a function has come to be widely known for not only deleting the FAT but also overwriting a remaining data area with a random value, a fixed value, or the like, thereby guaranteeing that the data does not remain. For example, Japanese Patent Application Laid-Open No. 2004-153517 discloses an apparatus that allows the number of times of deletion to be set arbitrarily according to a security level, and carries out the deletion according to the set number of times of deletion.

Further, in recent years, semiconductor storage devices using a flash memory, such as a device called a solid state drive (hereinafter referred to as an SSD), have been increasingly widely used as the external storage device. Some of the semiconductor storage devices carry out distributed writing called wear leveling to prolong a lifetime of the flash memory in the storage device. The semiconductor storage devices carrying out the wear leveling are configured to write the data while replacing a block so as to use a block into which the data has been written less frequently whenever possible. It is, therefore, also considered that even if the overwrite processing is performed on the remaining data area like the above-described example, the specified area may not be overwritten and the data may be left undeleted in the block yet to be replaced, depending on a method for controlling the block replacement in the wear leveling. A method of encrypting the stored data is effective as a means for preventing a leak of the data from such an external storage device.

The technique discussed in Japanese Patent Application Laid-Open No. 2004-153517 performs the deletion processing by a method set from a setting screen regardless of the type of the external storage device mounted on the apparatus. In the case of the semiconductor storage device, however, the overwrite deletion may leave the data undeleted in the block as described above. For this reason, if the deletion can be set from the setting screen of the apparatus, the user may misunderstand that the data can be completely deleted without being left in the block.

US2011/238901 relates to a mechanism which makes it possible to automatically and appropriately select an erase method of erasing user data in a shorter time such that the user data can by no means be reproduced, according to the type of a connected nonvolatile storage device. US 2002/181134 discloses a printer comprising user interface for designating the secure erasure method.

### SUMMARY OF THE INVENTION

According to a first aspect of the present invention, there is provided an information processing apparatus as specified in claims 1 to 5 According to a second aspect of the present invention, there is provided an information processing method as specified in claim 6 . According to a third aspect of the present invention, there is provided a storage medium as specified in claim 7

Further features of the present invention will become apparent from the following description of exemplary embodiments with reference to the attached drawings.

### BRIEF DESCRIPTION OF THE DRAWINGS

Fig. 1 illustrates one example of a hardware configuration of a multifunction peripheral (MFP).
Fig. 2 illustrates a general concept of an area configuration of a storage device mounted on the MFP.
Fig. 3 illustrates a partition configuration management table of the storage device.
Figs. 4A, 4B, 4C, and 4D illustrate examples of user interface (UI) screens for setting a deletion method.
Fig. 5 is a flowchart illustrating one example of information processing when the MFP is started up.
Fig. 6 is a flowchart illustrating one example of information processing when the MFP carries out printing.
Fig. 7 is a flowchart illustrating one example of information processing for setting data deletion in the MFP.
Fig. 8 illustrates one example of a data management setting screen.
Figs. 9A and 9B each illustrate an example of a screen where initialization of all pieces of data/settings is executed.
Fig. 10 is a flowchart illustrating one example of processing for deleting all the pieces of data from the MFP.

### DESCRIPTION OF THE EMBODIMENTS

In the following description, exemplary embodiments of the present invention will be described with reference to the drawings.

### (Hardware Configuration)

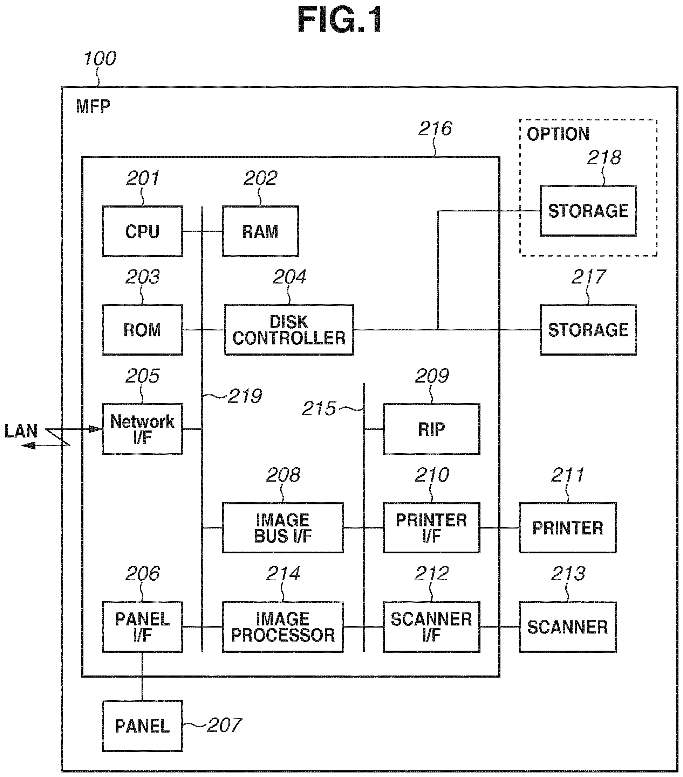

Fig. 1 illustrates one example of a hardware configuration of a multifunction peripheral (MFP) 100. In a first exemplary embodiment, the MFP is to be described as an example of an information processing apparatus. The MFP is one example of an image forming apparatus, the appended apparatus claims being limited to image forming apparatuses.

The MFP 100 includes therein a controller unit 216, a printer unit 211, a scanner unit 213, an operation unit 207, and storage devices 217 and 218. The controller unit 216 is connected to a local area network (LAN), and inputs and outputs image data and device information.

The printer unit 211 is a device that prints raster image data onto a sheet. Examples of a printing method of the printer unit 211 include an electrophotographic method that uses a photosensitive drum or a photosensitive belt, and an inkjet method of directly printing an image onto the sheet by ejecting ink from an extremely small nozzle array. The printer unit 211 starts the print processing according to an instruction from the CPU 201. The printer unit 211 includes a plurality of sheet feeding stages so that a user can select different sheet sizes or different sheet orientations. Further, the printer unit 211 has a finishing function as an additional function thereof. A finishing mechanism is called a finisher or the like. Some of finishing mechanisms sort printed print products copy set by copy set, staple the print products, and/or fold the print products.

The scanner unit 213 is a device that illuminates an image on a paper document and scans the image by a charge coupled device (CCD) line sensor, thereby converting the image into an electric signal as the raster image data. The scanner unit 213 performs an operation of reading out the document sheet under control by the CPU 201 according to an instruction to start the readout from the user via the operation unit 207.

The operation unit 207 includes a liquid crystal display (LCD), and a touch panel sheet is attached on the LCD. The operation unit 207 displays an operation screen thereon, and, along therewith, when a key in the displayed screen is selected (touched with a finger or the like), notifies the CPU 201 of positional information thereof via an operation unit interface 206. Further, the operation unit 207 includes, for example, a start key, a stop key, an identification (ID) key, and a reset key as various kinds of operation keys (hardware keys).

The storage devices 217 and 218 are each a nonvolatile storage device. For example, storage devices 217 and 218 may be a solid state drive (hereinafter referred to as an SSD) (which is an example of a semiconductor storage device), or a hard disk drive (hereinafter referred to as an HDD) (which is a magnetic disk device). In some examples, the storage device 217 may be an SSD and the storage device 218 may be a HDD (or vice versa) or they may be the same type of storage device. Image data and system data used by the MFP 100 are stored in the storage device. A plurality of nonvolatile storage devices can be connected, and the storage functionality can be expanded by additionally mounting the storage device (STORAGE) 218 as an option. The storage device 218 is used for mirroring the data stored in the storage device (STORAGE) 217 and/or used as an expanded area.

The controller unit 216 is a device that controls the MFP 100. The controller unit 216 includes a central processing unit (CPU) 201, a random access memory (RAM) 202, a read only memory (ROM) 203, a disk controller (DISK CONTROLLER) 204, a network interface (Network I/F) 205, the operation unit interface (PANEL I/F) 206, and an image bus interface (IMAGE BUS I/F) 208. These units are connected to a system bus 219. Further, the controller unit 216 includes a raster image processor (RIP) 209, a printer interface 210, a scanner interface 212, and an image processing unit 214. These units are connected to an image bus 215 that transfers the image data.

The CPU 201 is a processor that controls the MFP 100. The RAM 202 is a system network memory used for the CPU 201 to operate, and is also a program memory for recording a program and an image memory for temporarily recording the image data. A boot program of the system and various kinds of control programs are stored in the ROM 203. The disk controller 204 controls writing/reading of data from/into the system bus 219 into/from the storage devices 217 and 218.

The operation unit interface 206 is an interface unit with the operation unit (PANEL) 207, and outputs data to be displayed to the operation unit 207. The operation unit interface 206 notifies the CPU 201 of information input by the user from the operation unit 207.

The network interface 205 is connected to the LAN, and inputs and outputs data from and to a PC and another external apparatus.

The image bus interface 208 is a bus bridge for connecting the system bus 219 and the image bus 215 to each other, and converting a data structure. The image bus 215 is embodied by a Peripheral Component Interconnect (PCI) bus or Institute of Electrical and Electronics Engineers (IEEE) 1394. The raster image processor 209 rasterizes print data into a bitmap image. The printer interface 210 connects the printer unit 211 and the controller unit 216 to each other, and converts the image data synchronously or asynchronously. The scanner interface 212 connects the scanner unit 213 and the controller unit 216 to each other, and converts the image data synchronously or asynchronously. The image processing unit 214, for example, corrects the printer and/or converts a resolution with respect to print output image data by correcting, processing, and/or editing the input image data. Further, the image processing unit 214 rotates the image data, and performs compression/decompression processing such as Joint Photographic Experts Group (JPEG) on multivalued image data, and Joint Bi-level Image Experts Group (JBIG), Modified Modified READ (MMR), and Modified Huffman (MH) on binary image data.

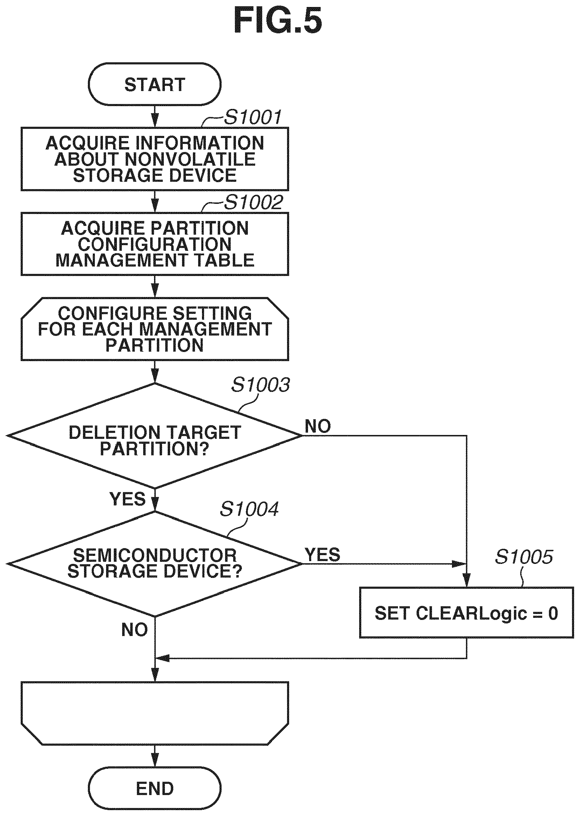

The CPU 201 performs processing based on the program stored in the ROM 203, the storage device 217 or 218, or the like, thereby realizing functions of the MFP 100 and processing according to flowcharts illustrated in Figs. 5 to 7 and 10 that will be described below.

### (Configuration of Storage Device)

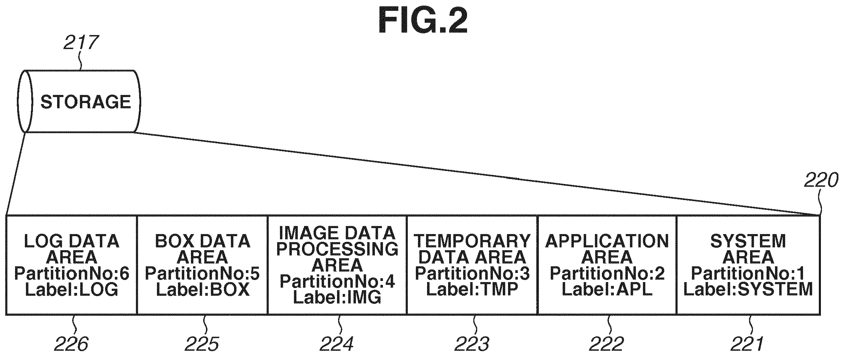

Fig. 2 illustrates a general concept of an area configuration of the storage device 217 mounted on the MFP 100.

An entire storage area 220 of the storage device 217 is divided into several areas (partitions), and is used individually for each purpose. As an example thereof, the MFP 100 uses the storage device 217 while dividing the storage device 217 into a system area 221, an application area 222, a temporary data area 223, an image data processing area 224, a box data area 225, and a log data area 226. Resource data, such as a program and a language used for the MFP 100 to operate, is stored in the system area 221. The application area 222 is an area used to store expanded software additionally installed on the MFP 100 and store data generated or acquired by the expanded software. The temporary data area 223 is an area to store temporarily generated data used for the MFP 100 to operate. The image data processing area 224 is an area for temporarily storing a result of the image processing of the data to be printed. The box data area 225 is an area for saving the image data on the scanned document and the image data received via the network interface 205 so that the image data can be reused. The log data area 226 is an area for storing an operation status of the MFP 100 and a log of a result of carrying out the printing or the scanning.

The data is stored in the storage device 217 for various purposes as described above. Data is temporarily stored in the image data processing area 224 as a file due to the print operation performed by the MFP 100, but this file becomes unnecessary and is removed when the print processing is completed. At this time, just performing deletion processing of a file system can only delete management data regarding the file, and keeps the file data remaining in the storage device 217. In the present exemplary embodiment, a deletion process for overcoming this shortcoming will be described. As will be described in more detail below, this deletion processing advantageously overwrites the data portion in the file with specific data.

### (Configuration Management Table of Storage Device)

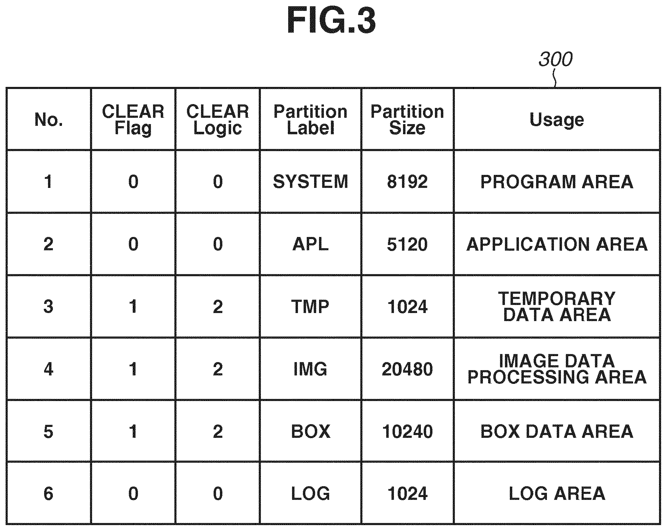

Fig. 3 illustrates a partition configuration management table of the storage device 217 illustrated in Fig. 2.

In Fig. 3, a partition configuration management table 300 includes No., CLEARFlag, CLEARLogic, PartitionLabel, PartitionSize, and Usage. The CPU 201 manages the partition configuration management table 300 while storing it in the storage device 217. Further, the CPU 201 uses the partition configuration management table 300 after reading it from the storage device 217 when the MFP 100 is started up. How to use the partition configuration management table 300 will be described below. The column titled "No." provides administrative serial numbers for identifying a partition. CLEARFlag is a flag indicating whether the partition is a partition on which the overwrite deletion processing is to be performed when a file on the partition is removed. CLEARFlag set to "0" means that the overwrite deletion is not to be carried out. CLEARFlag set to "1" means that the overwrite deletion is to be carried out. Now, the overwrite deletion refers to deleting the data from the storage device 217 by not only performing the deletion processing on the file system but also overwriting the file data area on the storage device 217 with use of a method that will be described below. The value of CLEARFlag is predetermined according to a purpose of the corresponding partition, and "1" is defined for a partition containing important data such as the image data and the temporary data, and confidential data. In Fig. 3, CLEARFlag indicates that the temporary data area 223, the image data processing area 224, and the box data area 225 are overwrite deletion targets. CLEARLogic indicates a deletion method for the overwrite deletion, and "0", "1", "2", and "3" mean refraining from the overwrite deletion, writing zero data once, writing random data once, and writing random data three times, respectively. CLEARLogic is set by the user according to a method that will be described below. The deletion method is not limited thereto, and the MFP 100 may be configured to be able to set another number of times of writing and/or data to be written.

PartitionLabel is a character string for identifying the partition by name. PartitionSize indicates a size of the corresponding partition by unit of megabyte (MB). Usage is supplementary information, and indicates what kind of data is stored in the partition.

The partition configuration management table 300 illustrated in Fig. 3 is acquired when the CPU 201 deletes the file, and is used to identify the deletion method. More specifically, once the area in which the file is stored is located based on a file descriptor of the file to be deleted, the CPU 201 identifies what kind of deletion method should be used to delete this area with use of the partition configuration management table 300.

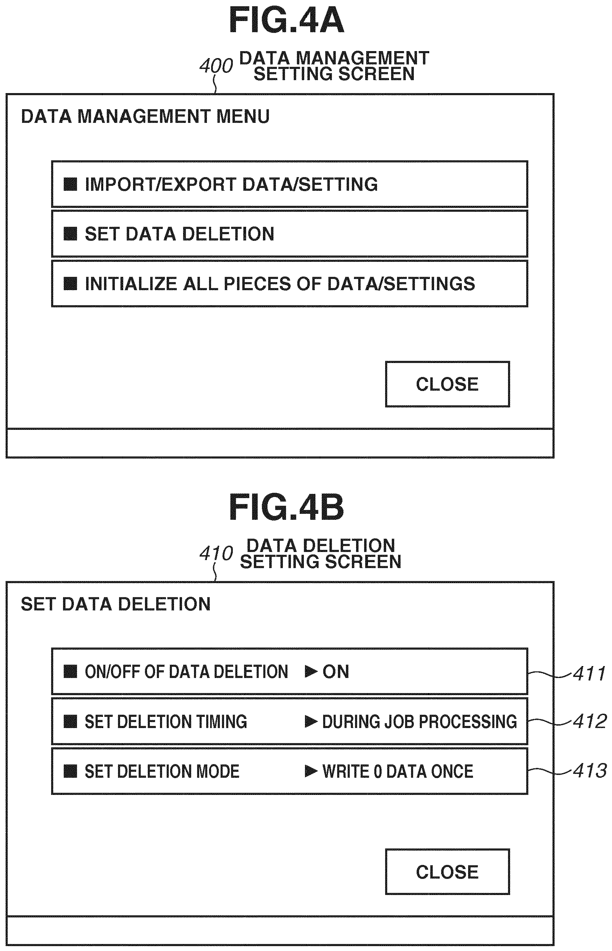

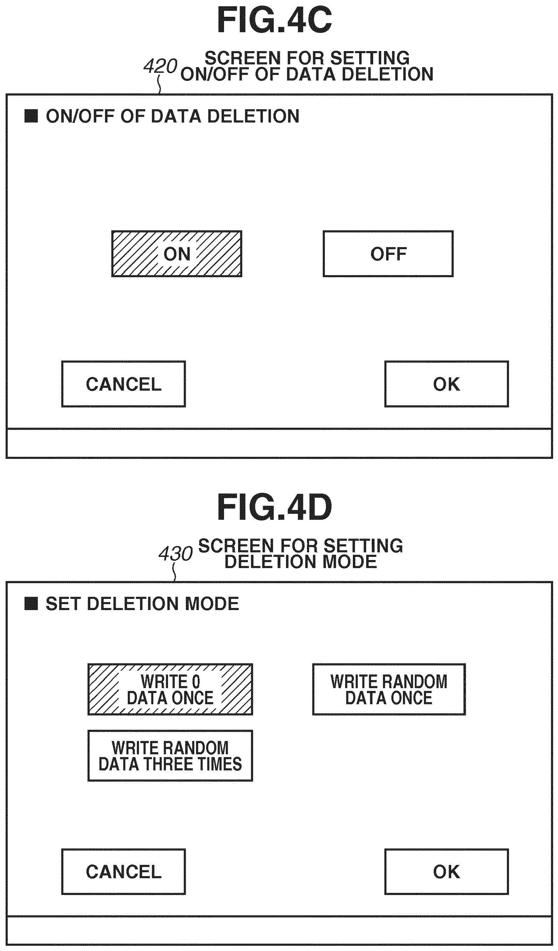

As described above, CLEARLogic in the partition configuration management table 300 can be specified by the CPU 201 based on a user operation via the operation unit 207 of the MFP 100. Figs. 4A to 4D illustrate one example of user interface (UI) screens for setting the deletion method. The UI screens illustrated in Figs. 4A to 4D are displayed on the operation unit 207 by the CPU 201. The UI screens illustrated in Figs. 4A to 4D are examples in the case where the HDD is mounted on the MFP 100 as the storage device 217. Upon receiving a setting of a data management menu, the CPU 201 displays a data management setting screen 400 illustrated in Fig. 4A on the operation unit 207. When a data deletion setting is selected in Fig. 4A, the CPU 201 displays a data deletion setting screen 410 illustrated in Fig. 4B on the operation unit 207. In Fig. 4B, "set ON/OFF of data deletion" 411 is an item for setting whether to carry out the overwrite deletion of the data. Fig. 4C illustrates a UI screen 420 displayed on the operation unit 207 when "set ON/OFF of data deletion" 411 is selected. "ON" or "OFF" can be set on the UI screen 420, and "ON" means that the overwrite deletion is to be carried out. "Set deletion timing" 412 is an item for setting a timing of carrying out the overwrite deletion of the data, and "during job processing" or "after job processing" can be selected as the deletion timing. "During job processing" means that, when conducting a job such as the printing, the MFP 100 carries out the overwrite deletion on a file that becomes unnecessary in the middle of conducting the job each time such an unnecessary file is generated. "After job processing" means that, when conducting the job such as the printing, the MFP 100 does not remove the file in the middle of conducting the job and carries out the overwrite deletion collectively after completing the job. If "after job processing" is selected, the usage of the CPU 201 for the overwrite deletion processing can be restricted while the job is in progress, and as a result, the processing for conducting the job can be completed quickly. "Set deletion mode" 413 is an item for setting the deletion method when carrying out the overwrite deletion of the data. Fig. 4D illustrates a UI screen 430 displayed on the operation unit 207 when "set deletion mode" 413 is selected. Selectable settings on the UI screen 430 are "write 0 data once", "write random data once", and "write random data three times".

If "OFF" is set on the UI screen 420, "0" is set in CLEARLogic in the partition configuration management table 300. If "write 0 data once", "write random data once", and "write random data three times" are set on the UI screen 430 with "ON" set on the UI screen 420, "1", "2", and "3" are set, respectively, in CLEARLogic in the partition configuration management table 300.

### (Information Processing when MFP 100 is Started Up)

Next, information processing when the MFP 100 is started up will be described with reference to Fig. 5.

In step S1001, when the MFP 100 is started up, the CPU 201 acquires information about the storage device 217 via the disk controller 204. The CPU 201 acquires information such as a name of a manufacturer, a model number, a capacity, and the number of rotations as the information about the storage device 217. Now, the number of rotations indicates how many times a medium in the storage device rotates per minute. In the case of the HDD, a value such as 7200 is acquired as the number of rotations. The semiconductor storage device such as the SSD does not rotate, and therefore a value indicating that the storage device 217 is a non-rotational medium is acquired. In other words, based on the acquired value of the number of rotations, the CPU 201 can determine which is used as the storage device 217 mounted on the MFP 100, the HDD or the SSD. The number of rotations is one example of 'type information' about the nonvolatile storage device.

Next, in step S1002, the CPU 201 reads out the partition configuration management table 300 illustrated in Fig. 3 from the storage device 217, and performs the setting on a partition-by-partition basis. When setting the partition, the CPU 201 sets CLEARLogic in the read partition configuration management table 300 again according to the configuration of the device.

In step S1003, the CPU 201 acquires CLEARFlag in the partition configuration management table 300, and determines whether the present partition is the partition targeted for the deletion. If the CPU 201 determines that the present partition is not the partition targeted for the deletion (NO in step S1003), the processing proceeds to step S1005. If the CPU 201 determines that the present partition is the partition targeted for the deletion (YES in step S1003), the processing proceeds to step S1004.

In step S1005, the CPU 201 sets CLEARLogic to "0".

In step S1004, the CPU 201 determines whether the device mounted on the MFP 100 is the semiconductor storage device based on the information indicating the number of rotations of the storage device 217 that has been acquired in step S1001. If the CPU 201 determines that the device mounted on the MFP 100 is the semiconductor storage device (YES in step S1004), the processing proceeds to step S1005. If the CPU 201 determines that the device mounted on the MFP 100 is not the semiconductor storage device (NO in step S1004), the processing proceeds to step S1003 to move on to a check of the next partition.

In step S1005, the CPU 201 sets CLEARLogic to "0". If the CPU 201 determines that the device mounted on the MFP 100 is not the semiconductor storage device (NO in step S1004), the processing proceeds to step S1003 to move on to the check of the next partition.

Upon completing checks of all partitions, the CPU 201 ends the present processing.

### (Print Processing in MFP 100)

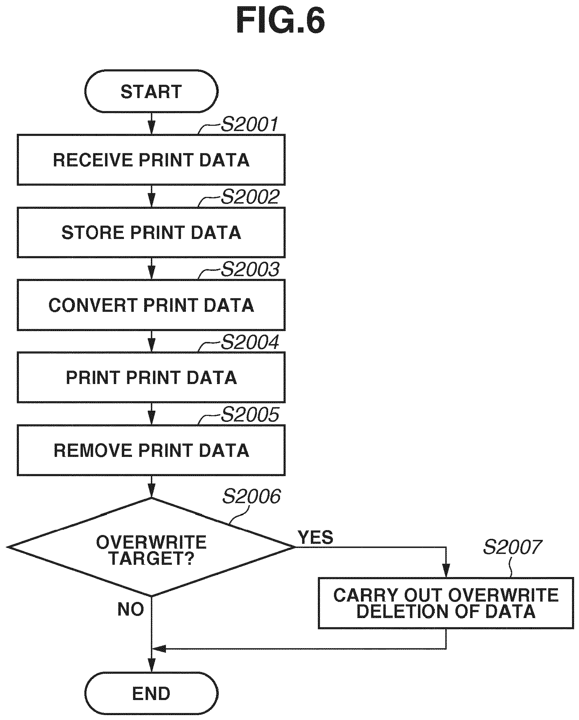

Next, information processing at the time of the printing will be described with reference to Fig. 6 in preparation for a description of the data overwrite processing by the MFP 100.

In step S2001, the CPU 201 receives print job data via the network interface 205.

Then, in step S2002, the CPU 201 stores the received print job data into the temporary data area 223 of the storage device 217.

Further, in step S2003, the CPU 201 reads out the temporarily stored print job data from the storage device 217, and generates the bitmap data by the raster image processor 209.

In step S2004, the CPU 201 transmits the generated bitmap data to the printer unit 211 via the printer interface 210, thereby causing the printer unit 211 to carry out the printing.

After the printing is completed, in step S2005, the CPU 201 removes the received data stored in the storage device 217 in step S2002.

In step S2006, the CPU 201 identifies the area in which the data is stored from the file descriptor of the data targeted for the removal, and determines whether the identified area is the overwrite deletion target with use of the partition configuration management table 300. In the present example, the received data is stored in the temporary data area 223, and therefore the CPU 201 acquires the value of CLEARLogic corresponding to the temporary data area 223. If the acquired value is "0" (NO in step S2006), the CPU 201 removes only a management area of the file system without carrying out the overwrite, and ends the processing according to the flowchart illustrated in Fig. 6. On the other hand, if the acquired value is "1" or a greater value (YES in step S2006), the processing proceeds to step S2007.

In step S2007, the CPU 201 performs the processing for overwriting the target area with use of the preset deletion method.

As described in the description of the processing flow at the time of the startup illustrated in Fig. 5, if the storage device 217 mounted on the MFP 100 is the semiconductor storage device, the value of CLEARLogic is set to "0" and therefore the overwrite processing is not performed.

### (Processing for Setting Data Deletion in MFP 100)

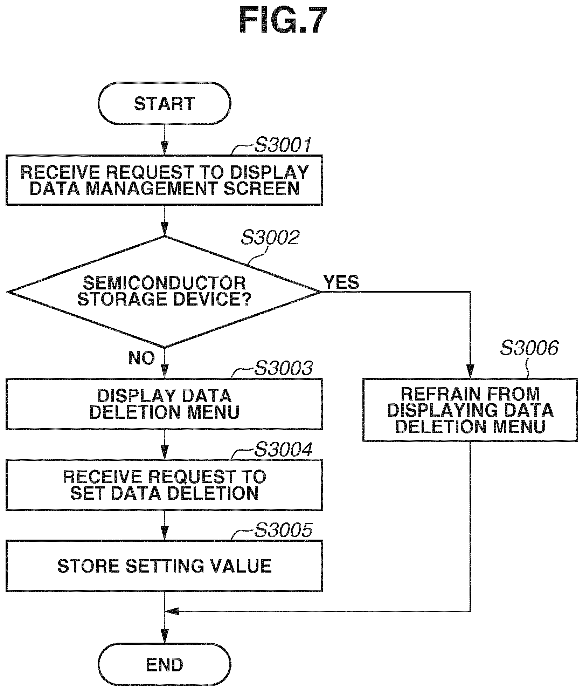

Next, information processing for setting the data deletion in the MFP 100 will be described with reference to Fig. 7.

First, in step S3001, the CPU 201 receives a request to display a data management screen via the operation unit interface 206.

Next, in step S3002, the CPU 201 determines whether the mounted device is the semiconductor storage device. The CPU 201 determines whether the mounted device is the semiconductor storage device by acquiring the information indicating the number of rotations of the storage device 217 that has been acquired in step S1001 illustrated in Fig. 5. The CPU 201 may store a result of determining that the mounted device is the semiconductor storage device in the startup processing flow illustrated in Fig. 5 into the RAM 202 or the like in advance and make the determination based on this information instead of making the determination based on the information indicating the number of rotations each time. If the CPU 201 determines that the mounted device is not the semiconductor storage device (NO in step S3002), the processing proceeds to step S3003. If the CPU 201 determines that the mounted device is the semiconductor storage device (YES in step S3002), the processing proceeds to step S3006.

In step S3003, the CPU 201 displays the data management setting screen 400 illustrated in Fig. 4A on the operation unit 207. Further, upon receiving a request to set the data deletion via the data management setting screen 400, the CPU 201 displays the data deletion setting screen 410 on the operation unit 207. The processing in step S3003 is one example of display control.

In step S3004, the CPU 201 receives a request to change the ON/OFF setting of the data deletion or the setting of the deletion mode via the data deletion setting screen 410.

In step S3005, the CPU 201 stores the set value into the partition configuration management table 300 stored in the storage device 217.

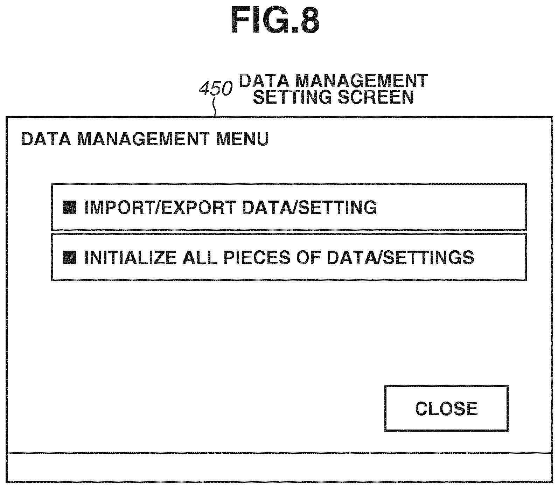

In step S3006, the CPU 201 displays a data management setting screen 450 illustrated in Fig. 8 on the operation unit 207. The "data deletion menu" is not displayed on the data management setting screen 450 illustrated in Fig. 8, and the user cannot change the setting of the data deletion here. The processing in step S3006 is one example of the display control.

In this manner, the MFP 100 according to the first exemplary embodiment switches the display of the data management setting screen according to the type of the mounted storage device. Due to this configuration, the MFP 100 can advantageously prevent the user from undesirably erroneously setting the data deletion when the storage device for which the overwrite deletion function is not effective is mounted. Further, the MFP 100 can appropriately exercise the overwrite deletion function by checking the type of the mounted storage device and performing the setting of the overwrite deletion again when the MFP 100 is started up.

The first exemplary embodiment has been described addressing the setting of the overwrite processing when removing the data temporarily stored when conducting the job such as the printing. A second exemplary embodiment will be described addressing a setting of processing when all pieces of data stored in the MFP 100 are to be deleted when, for example, the MFP 100 is to be disposed of.

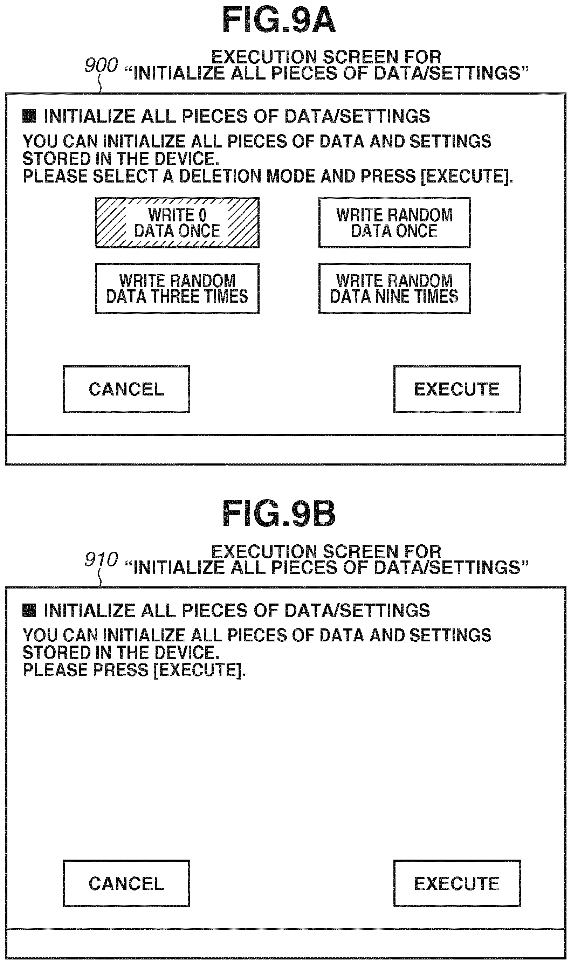

Figs. 9A and 9B each illustrate a UI screen for setting a deletion method for deleting all the pieces of data stored in the MFP 100. The UI screen illustrated in each of Figs. 9A and 9B is displayed on the operation unit 207 by the CPU 201. The UI screen illustrated in each of Figs. 9A and 9B is a screen displayed on the operation unit 207 of the MFP 100 when "initialize all pieces of data/settings" is selected on the data management setting screen 400 illustrated in Fig. 4A.

Fig. 9A illustrates an execution screen 900 for "initialize all pieces of data/settings" in the case where the HDD is mounted on the MFP 100 as the storage device 217. The user can select the method for deleting the data from a plurality of methods on the execution screen 900. The user can select "write 0 data once", "write random data once", "write random data three times", and "write random data nine times" on the execution screen 900. When one of the deletion methods is selected and "execute" is selected on the execution screen 900 for "initialize all pieces of data/settings", the CPU 201 deletes the data stored in the storage device 217. In other words, the CPU 201 overwrites and fills the targeted system area and data area with the predetermined number or the random data. As a result, the existing data becomes practically unreadable.

Fig. 9B illustrates an execution screen 910 for "initialize all pieces of data/settings" in the case where the SSD is mounted on the MFP 100 as the storage device 217. The user cannot select the method for deleting the data on the execution screen 910. When "execute" is selected on the execution screen 910 for "initialize all pieces of data/settings", the CPU 201 deletes the data stored in the storage device 217.

Regarding the screen displayed on the operation unit 207 when the "initialize all pieces of data/settings" is selected on the data management setting screen 400 illustrated in Fig. 4A, the CPU 201 determines which screen to display, the screen illustrated in Fig. 9A or the screen illustrated in Fig. 9B, based on the determination of whether the storage device 217 mounted on the MFP 100 is the semiconductor storage device, similarly to Fig. 7.

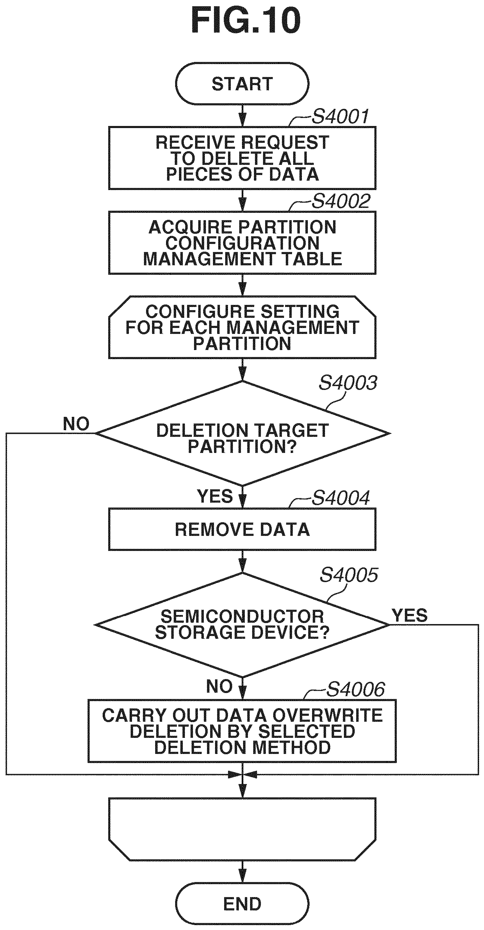

The processing for deleting all the pieces of data from the MFP 100 will be described with reference to Fig. 10.

In step S4001, the CPU 201 receives a request to delete all the pieces of data via the operation unit interface 206. At this time, the CPU 201 also acquires the information about the data deletion method illustrated in Fig. 9A or 9B.

Upon receiving the request to delete all the pieces of data, in step S4002, the CPU 201 acquires the partition configuration management table 300 and performs the deletion processing on a partition-by-partition basis.

First, in step S4003, the CPU 201 acquires CLEARFlag in the partition configuration management table 300, and determines whether the present partition is the partition targeted for the deletion. If the CPU 201 determines that the present partition is not the deletion target (NO in step S4003), the processing proceeds to the check of the next partition. On the other hand, if the CPU 201 determines that the present partition is the deletion target (YES in step S4003), the processing proceeds to step S4004.

In step S4004, the CPU 201 removes all pieces of data in the targeted partition.

Next, in step S4005, the CPU 201 determines whether the device mounted on the MFP 100 is the semiconductor storage device. If the CPU 201 determines that the device mounted on the MFP 100 is the semiconductor storage device (YES in step S4005), the processing proceeds to the check of the next partition. On the other hand, if the CPU 201 determines that the device mounted on the MFP 100 is not the semiconductor storage device (NO in step S4005), the processing proceeds to step S4006.

In step S4006, the CPU 201 performs the processing for overwriting the data on the entire target partition according to the deletion method acquired in step S4001. The present exemplary embodiment has been described as the method that does not carry out the overwrite deletion of the data in the case of the semiconductor storage device. However, the CPU 201 may perform a deletion method suitable for the semiconductor storage device, such as deletion processing according to the "SecureErase" command, on the entire target partition. "SecureErase" is a technique that physically deletes almost all sectors in the SSD. Alternatively, the CPU 201 may perform the deletion processing by executing the TRIM command if both the OS and the SSD support the TRIM command. The TRIM command can specify an entire block that is a physical memory area having a plurality of pages, and physically delete data contained in this block.

In this manner, the MFP 100 according to the second exemplary embodiment switches the display of the screen for deleting all the pieces of data according to the type of the mounted storage device. Due to this configuration, the MFP 100 can prevent the user from undesirably erroneously setting the data deletion when the storage device for which the overwrite deletion function is not effective is mounted. Further, the MFP 100 can exercise the appropriate deletion function by also checking the type of the mounted storage device and automatically determining the method for physically deleting the data including the overwrite deletion method at the time of the data deletion.

In this manner, according to each of the above-described exemplary embodiments, the information processing apparatus can prevent the user from undesirably erroneously setting the data deletion in a case where the external storage device for which the overwrite deletion function is not effective is mounted.

According to one aspect of the present invention, the information processing apparatus can select the appropriate deletion method suitable for the external storage device and safely manage the external storage device.

According to another aspect of the present invention, the information processing apparatus can prevent the user from undesirably erroneously setting the data deletion in a case where the external storage device for which the overwrite deletion function is not effective is mounted.

### Other Embodiments

Embodiment(s) of the present invention can be realized by an image forming apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the image forming apparatus by, for example, reading out and executing the computer executable instructions from the storage medium to perform the functions of one or more of the above-described embodiment(s) and/or controlling the one or more circuits to perform the functions of one or more of the above-described embodiment(s). The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

## Claims

1. An image forming apparatus (100) comprising:
acquisition means (201) for acquiring type information about a nonvolatile storage device connected to the image forming apparatus,
**characterized in that** the image forming apparatus further comprises:
display control means (201, 206) for displaying a first setting screen (400, 450) including a plurality of display items related to an operation setting of the image forming apparatus based on reception of a user operation,
wherein the display control means (201, 206) either displays or does not display based on the type information acquired by the acquisition means, on the first setting screen (400, 450), a first display item amongst the plurality of display items for shifting the first setting screen (400) to a second setting screen (410) for receiving a setting by a user related to deletion of data stored in the nonvolatile storage device, and
storage management means (201) for causing the setting received via the second setting screen (410) displayed upon selection of the first display item by the user, to be stored in the nonvolatile storage device,
wherein the type information includes information indicating whether the nonvolatile storage device is a semiconductor storage device or a nonvolatile storage device different from the semiconductor storage device,
wherein the display control means (201, 206) is configured to not display the first display item on the first setting screen (450) in a case where the nonvolatile storage device is a semiconductor storage device, and to display the first display item on the first setting screen (400) in a case where the nonvolatile storage device is a nonvolatile storage device different from the semiconductor storage device, based on the type information,
wherein the second setting screen (410) includes a display item (411) for setting whether to carry out overwrite deletion of the data.

2. The image forming apparatus according to claim 1, wherein the second setting screen (410) includes a display item (412) for setting a time at which to carry out overwrite deletion of the data.

3. The image forming apparatus according to any one of the previous claims, wherein the second setting screen (410) includes a display item (413) for setting a deletion method for carrying out an overwrite deletion of the data.

4. The image forming apparatus according to any one of the previous claims, wherein,
a second display item for shifting a setting screen to a delete screen for deleting all pieces of data is displayed on the first setting screen (400, 450) regardless of the type information acquired by the acquisition means, and
wherein, in a case where a user operation for selecting the second display item via the first setting screen is received, the display control means controls whether to display, on the delete screen (900, 910), a deletion mode based on the type information acquired by the acquisition means.

5. The image forming apparatus according to claim 4, wherein, in a case where the user operation for selecting the second display item via the first setting screen (400, 450) is received, the display control means (201, 206) is configured to display the delete screen (910) not including a display item for setting the deletion mode if the nonvolatile storage device is the semiconductor storage device, and to display the delete screen (900) at least including a display item for setting the deletion mode if the nonvolatile storage device is not the semiconductor storage device, based on the type information, and
wherein in a case where a deletion operation via the delete screen (910) not including the display item is received, the storage management means (201) performs a deleting operation using a Secure Erase Command for deleting a physical sector of the semiconductor storage device.

6. An information processing method to be executed by an image forming apparatus (100), the information processing method comprising:
acquiring type information about a nonvolatile storage device connected to the image forming apparatus,
**characterized in that** the method further comprises:
controlling display of a first setting screen (400, 450) including a plurality of display items related to an operation setting of the image forming apparatus based on reception of a user operation,
controlling whether to display based on the acquired type information, on the first setting screen (400, 450), a first display item amongst the plurality of display items for shifting the first setting screen (400) to a second setting screen (410) for receiving a setting by a user related to deletion of data stored in the nonvolatile storage device, and
storing the setting received via the second setting screen (410) displayed upon selection of the first display item by the user, in the nonvolatile storage device,
wherein the type information includes information indicating whether the nonvolatile storage device is a semiconductor storage device or a nonvolatile storage device different from the semiconductor storage device,
and **in that** the method further comprises:
not displaying the first display item on the first setting screen (450) in a case where the nonvolatile storage device is a semiconductor storage device, and displaying the first display item on the first setting screen (400) in a case where the nonvolatile storage device is a nonvolatile storage device different from the semiconductor storage device, based on the type information,
wherein the second setting screen (410) includes a display item (411) for setting whether to carry out overwrite deletion of the data.

7. A non-transitory storage medium storing a computer program that, when executed by an image forming apparatus, cause the image forming apparatus to perform an information processing method according to claim 6.

## Patentansprüche

1. Bilderzeugungsvorrichtung (100), umfassend:
eine Erfassungseinrichtung (201) zum Erfassen von Typinformation über ein nichtflüchtiges Speicherdevice, das mit der Bilderzeugungsvorrichtung verbunden ist,
**dadurch gekennzeichnet, dass** die Bilderzeugungsvorrichtung ferner umfasst:
eine Anzeigesteuereinrichtung (201, 206) zum Anzeigen eines ersten Einstellbildschirms (400, 450), der mehrere Anzeigeelemente enthält, die sich auf eine Betriebseinstellung der Bilderzeugungsvorrichtung beziehen, basierend auf einem Empfang einer Benutzerbedienung,
wobei die Anzeigesteuereinrichtung (201, 206) basierend auf der durch die Erfassungseinrichtung erfassten Typinformation auf dem ersten Einstellbildschirm (400, 450) ein erstes Anzeigeelement unter den mehreren Anzeigeelementen entweder anzeigt oder nicht anzeigt, und zwar zum Wechseln des ersten Einstellbildschirms (400) zu einem zweiten Einstellbildschirm (410), um eine Einstellung durch einen Benutzer zu empfangen, die sich auf ein Löschen von im nichtflüchtigen Speicherdevice gespeicherten Daten bezieht, und
eine Speicherverwaltungseinrichtung (201) zum Veranlassen, dass die Einstellung, die über den zweiten Einstellbildschirm (410) empfangen wird, der bei Auswahl des ersten Anzeigeelements durch den Benutzer angezeigt wird, im nichtflüchtigen Speicherdevice gespeichert wird,
wobei die Typinformation Information enthält, die angibt, ob das nichtflüchtige Speicherdevice ein Halbleiterspeicherdevice oder ein nichtflüchtiges Speicherdevice ist, das sich vom Halbleiterspeicherdevice unterscheidet,
wobei die Anzeigesteuereinrichtung (201, 206) konfiguriert ist, basierend auf der Typinformation, das erste Anzeigeelement auf dem ersten Einstellbildschirm (450) in einem Fall nicht anzuzeigen, in dem das nichtflüchtige Speicherdevice ein Halbleiterspeicherdevice ist, und das erste Anzeigeelement auf dem ersten Einstellbildschirm (400) in einem Fall anzuzeigen, in dem das nichtflüchtige Speicherdevice ein nichtflüchtiges Speicherdevice ist, das sich vom Halbleiterspeicherdevice unterscheidet,
wobei der zweite Einstellbildschirm (410) ein Anzeigeelement (411) zum Einstellen enthält, ob eine Überschreibung der Daten ausgeführt werden soll.

2. Bilderzeugungsvorrichtung nach Anspruch 1, wobei der zweite Einstellbildschirm (410) ein Anzeigeelement (412) zum Einstellen einer Zeit enthält, zu der eine Überschreibung der Daten ausgeführt werden soll.

3. Bilderzeugungsvorrichtung nach einem der vorhergehenden Ansprüche,
wobei der zweite Einstellbildschirm (410) ein Anzeigeelement (413) zum Einstellen eines Löschverfahrens zum Ausführen einer Überschreibung der Daten enthält.

4. Bilderzeugungsvorrichtung nach einem der vorhergehenden Ansprüche,
wobei ein zweites Anzeigeelement zum Wechseln eines Einstellbildschirms zu einem Löschbildschirm zum Löschen aller Datenteile auf dem ersten Einstellbildschirm (400, 450) unabhängig von der durch die Erfassungseinrichtung erfassten Typinformation angezeigt wird, und
wobei in einem Fall, in dem eine Benutzerbedienung zum Auswählen des zweiten Anzeigeelements über den ersten Einstellbildschirm empfangen wird, die Anzeigesteuereinrichtung steuert, ob auf dem Löschbildschirm (900, 910) ein Löschmodus basierend auf der durch die Erfassungseinrichtung erfassten Typinformation angezeigt wird.

5. Bilderzeugungsvorrichtung nach Anspruch 4, wobei in einem Fall, in dem die Benutzerbedienung zum Auswählen des zweiten Anzeigeelements über den ersten Einstellbildschirm (400, 450) empfangen wird, die Anzeigesteuereinrichtung (201, 206) konfiguriert ist, basierend auf der Typinformation, den Löschbildschirm (910), der kein Anzeigeelement zum Einstellen des Löschmodus enthält, anzuzeigen, falls das nichtflüchtige Speicherdevice das Halbleiterspeicherdevice ist, und den Löschbildschirm (900), der zumindest ein Anzeigeelement zum Einstellen des Löschmodus enthält, anzuzeigen, falls das nichtflüchtige Speicherdevice nicht das Halbleiterspeicherdevice ist, und
wobei in einem Fall, in dem eine Löschbedienung über den Löschbildschirm (910), der das Anzeigeelement nicht enthält, empfangen wird, die Speicherverwaltungseinrichtung (201) eine Löschbedienung unter Verwendung eines Secure Erase Commands zum sicheren Löschen durchführt, um einen physischen Sektor des Halbleiterspeicherdevices zu löschen.

6. Informationsverarbeitungsverfahren, das durch eine Bilderzeugungsvorrichtung (100) auszuführen ist, wobei das Informationsverarbeitungsverfahren umfasst:
Erfassen von Typinformation über ein nichtflüchtiges Speicherdevice, das mit der Bilderzeugungsvorrichtung verbunden ist,
**dadurch gekennzeichnet, dass** das Verfahren ferner umfasst:
Steuern einer Anzeige eines ersten Einstellbildschirms (400, 450), der mehrere Anzeigeelemente enthält, die sich auf eine Betriebseinstellung der Bilderzeugungsvorrichtung beziehen, basierend auf einem Empfang einer Benutzerbedienung,
Steuern, ob, basierend auf der erfassten Typinformation, auf dem ersten Einstellbildschirm (400, 450) ein erstes Anzeigeelement unter den mehreren Anzeigeelementen anzuzeigen ist, und zwar zum Wechseln des ersten Einstellbildschirms (400) zu einem zweiten Einstellbildschirm (410), um eine Einstellung durch einen Benutzer zu empfangen, die sich auf ein Löschen von im nichtflüchtigen Speicherdevice gespeicherten Daten bezieht, und
Speichern, im nichtflüchtigen Speicherdevice, der Einstellung, die über den zweiten Einstellbildschirm (410) empfangen wird, der bei Auswahl des ersten Anzeigeelements durch den Benutzer angezeigt wird,
wobei die Typinformation Information enthält, die angibt, ob das nichtflüchtige Speicherdevice ein Halbleiterspeicherdevice oder ein nichtflüchtiges Speicherdevice ist, das sich vom Halbleiterspeicherdevice unterscheidet,
und dadurch, dass das Verfahren ferner umfasst:
Nicht-Anzeigen, basierend auf der Typinformation, des ersten Anzeigeelements auf dem ersten Einstellbildschirm (450) in einem Fall, in dem das nichtflüchtige Speicherdevice ein Halbleiterspeichedevice ist, und Anzeigen des ersten Anzeigeelements auf dem ersten Einstellbildschirm (400) in einem Fall, in dem das nichtflüchtige Speicherdevice ein nichtflüchtiges Speicherdevice ist, das sich vom Halbleiterspeicherdevice unterscheidet,
wobei der zweite Einstellbildschirm (410) ein Anzeigeelement (411) zum Einstellen enthält, ob eine Überschreibung der Daten ausgeführt werden soll.

7. Nichtflüchtiges Speichermedium, das ein Computerprogramm speichert, das bei Ausführung durch eine Bilderzeugungsvorrichtung diese dazu veranlasst, ein Informationsverarbeitungsverfahren nach Anspruch 6 auszuführen.

## Revendications

1. Appareil de formation d'image (100) comprenant :
un moyen d'acquisition (201) destiné à acquérir des informations de type concernant un dispositif mémoire non volatile connecté à l'appareil de formation d'image,
l'appareil de formation d'image étant **caractérisé en ce qu'**il comprend en outre :
un moyen de commande d'affichage (201, 206) destiné à afficher un premier écran de définition (400, 450) comprenant une pluralité d'éléments d'affichage associés à une définition d'opération de l'appareil de formation d'image sur la base de la réception d'une opération d'utilisateur,
dans lequel le moyen de commande d'affichage (201, 206) soit affiche, soit n'affiche pas, sur la base des informations de type acquises par le moyen d'acquisition, sur le premier écran de définition (400, 450), un premier élément d'affichage parmi la pluralité d'éléments d'affichage permettant de commuter du premier écran de définition (400) à un second écran de définition (410) pour recevoir une définition effectuée par un utilisateur associée à la suppression de données mémorisées dans le dispositif mémoire non volatile, et
un moyen de gestion de mémoire (201) destiné à provoquer la mémorisation, dans le dispositif mémoire non volatile, de la définition reçue par le biais du second écran de définition (410) affiché lors de la sélection du premier élément d'affichage par l'utilisateur,
dans lequel les informations de type comprennent des informations indiquant si le dispositif mémoire non volatile est un dispositif mémoire à semi-conducteurs ou un dispositif mémoire non volatile différent du dispositif mémoire à semi-conducteurs,
dans lequel le moyen de commande d'affichage (201, 206) est configuré pour ne pas afficher le premier élément d'affichage sur le premier écran de définition (450) dans un cas dans lequel le dispositif mémoire non volatile est un dispositif mémoire à semi-conducteurs, et pour afficher le premier élément d'affichage sur le premier écran de définition (400) dans un cas dans lequel le dispositif mémoire non volatile est un dispositif mémoire non volatile différent du dispositif mémoire à semi-conducteurs, sur la base des informations de type,
dans lequel le second écran de définition (410) comprend un élément d'affichage (411) permettant de définir s'il convient d'exécuter une suppression par écrasement des données.

2. Appareil de formation d'image selon la revendication 1, dans lequel le second écran de définition (410) comprend un élément d'affichage (412) permettant de définir un instant auquel il convient d'exécuter une suppression par écrasement des données.

3. Appareil de formation d'image selon l'une quelconque des revendications précédentes, dans lequel le second écran de définition (410) comprend un élément d'affichage (413) permettant de définir un procédé de suppression pour exécuter une suppression par écrasement des données.

4. Appareil de formation d'image selon l'une quelconque des revendications précédentes, dans lequel
un second élément d'affichage permettant de commuter un écran de définition vers un écran de suppression destiné à supprimer tous les éléments de données, est affiché sur le premier écran de définition (400, 450) quelles que soient les informations de type acquises par le moyen d'acquisition, et
dans lequel, dans un cas d'une réception d'une opération d'utilisateur ayant pour objet de sélectionner le second élément d'affichage par le biais du premier écran de définition, le moyen de commande d'affichage commande s'il convient d'afficher, sur l'écran de suppression (900, 910), un mode de suppression sur la base des informations de type acquises par le moyen d'acquisition.

5. Appareil de formation d'image selon la revendication 4, dans lequel, dans un cas d'une réception de l'opération d'utilisateur ayant pour objet de sélectionner le second élément d'affichage par le biais du premier écran de définition (400, 450), le moyen de commande d'affichage (201, 206) est configuré pour afficher l'écran de suppression (910) ne comprenant pas d'élément d'affichage permettant de définir le mode de suppression si le dispositif mémoire non volatile est le dispositif mémoire à semi-conducteurs, et pour afficher l'écran de suppression (900) comprenant au moins un élément d'affichage permettant de définir le mode de suppression si le dispositif mémoire non volatile n'est pas le dispositif mémoire à semi-conducteurs, sur la base des informations de type, et
dans lequel, dans un cas d'une réception d'une opération de suppression par le biais de l'écran de suppression (910) ne comprenant pas l'élément d'affichage, le moyen de gestion de mémoire (201) met en œuvre une opération de suppression au moyen d'une instruction d'effacement sécurisée pour supprimer un secteur physique du dispositif mémoire à semi-conducteurs.

6. Procédé de traitement d'informations à exécuter par un appareil de formation d'image (100), le procédé de traitement d'informations comprenant l'étape consistant à :
acquérir des informations de type concernant un dispositif mémoire non volatile connecté à l'appareil de formation d'image,
le procédé étant **caractérisé en ce qu'**il comprend en outre les étapes consistant à :
commander un affichage d'un premier écran de définition (400, 450) comprenant une pluralité d'éléments d'affichage associés à une définition d'opération de l'appareil de formation d'image sur la base de la réception d'une opération d'utilisateur,
commander s'il convient d'afficher, sur la base des informations de type acquises, sur le premier écran de définition (400, 450), un premier élément d'affichage parmi la pluralité d'éléments d'affichage permettant de commuter du premier écran de définition (400) à un second écran de définition (410) pour recevoir une définition par un utilisateur associée à une suppression de données mémorisées dans le dispositif mémoire non volatile, et
mémoriser la définition reçue par le biais du second écran de définition (410) affiché lors de la sélection du premier élément d'affichage par l'utilisateur, dans le dispositif mémoire non volatile,
dans lequel les informations de type comprennent des informations indiquant si le dispositif mémoire non volatile est un dispositif mémoire à semi-conducteurs ou un dispositif mémoire non volatile différent du dispositif mémoire à semi-conducteurs,
et **en ce que** le procédé comprend en outre les étapes consistant à :
ne pas afficher le premier élément d'affichage sur le premier écran de définition (450) dans un cas dans lequel le dispositif mémoire non volatile est un dispositif mémoire à semi-conducteurs, et afficher le premier élément d'affichage sur le premier écran de définition (400) dans un cas dans lequel le dispositif mémoire non volatile est un dispositif mémoire non volatile différent du dispositif mémoire à semi-conducteurs, sur la base des informations de type,
dans lequel le second écran de définition (410) comprend un élément d'affichage (411) permettant de définir s'il convient d'exécuter une suppression par écrasement des données.

7. Support d'informations non transitoire contenant en mémoire un programme d'ordinateur qui, lorsqu'il est exécuté par un appareil de formation d'image, amène l'appareil de formation d'image à mettre en œuvre un procédé de traitement d'informations selon la revendication 6.
